# EUROPEAN PATENT APPLICATION

(11) **EP 3 971 109 A1**
(43) Date of publication of application: **23.03.2022**
(21) Application number: 21162950.6
(22) Date of filing: 16.03.2021
(51) Int. Cl.: B65F 1/14, B62B 1/06, B65F 3/00

(54) **DUSTBIN MOVING VEHICLE**

(30) Priority: 20.09.2020 CN 202022063371 U
(71) Applicant: Jiang, Li, Ningbo, Zheijiang 315000 (CN)
(72) Inventor: Jiang, Li, Ningbo, Zheijiang 315000 (CN)
(74) Representative: Petculescu, Ana-Maria

(57) **Abstract**

An improved dustbin moving vehicle includes a rod body (4). A first positioning member (42) is arranged on the rod body (4); the rod body (4) is movably connected with a positioning rod (2); a second positioning member (21) is arranged on the positioning rod (2); the rod body (4) is movably connected with a pull rod (1); a supporting rod (3) is arranged on the rod body (4); and the bottom of the supporting rod is provided with a wheel (31). The improved dustbin moving vehicle is simple in structure and convenient to use. During use, the pull rod and the positioning rod are unfolded; the first positioning member and the second positioning member on the positioning rod are hooked or clamped on a dustbin to fix the dustbin; and the pull rod is then pushed and pulled, so that the dustbin is convenient to move. Meanwhile, in the invention, the positioning rod is movably connected to the rod body, and the pull rod is also movably connected to the rod body, so that the vehicle is flexible to turn in the moving process of the dustbin. When the vehicle is not used, the positioning rod and the pull rod hang down and are closed up to make the whole volume reduced and facilitate storage.

## Description

### TECHNICAL FIELD

The invention belongs to the field of dustbin transferring equipment, and in particular, an improved dustbin moving vehicle.

### BACKGROUND

Dustbins, garbage cans, etc., are containers for storing garbage, and are essential facilities in ordinary homes, offices, communities, roadsides and other places. According to different use places and use functions, there are various types of dustbins. There are small dustbins suitable for indoor use, large dustbins suitable for outdoor use, movable dustbins and fixed dustbins.

At the present, with the improvement of people's awareness of environmental protection and the promotion of garbage classification policies, dustbins in communities and on roadsides are becoming more and more unified and professional. Such dustbins are generally larger dustbins with a cover body and wheels convenient for transferring. A dustbin will be often contaminated with some garbage and dirt on its exterior after use. It is inconvenient to move the dustbin directly with hands. Furthermore, the dustbin is relatively large and heavy, so it is laborious to move. Generally, some cart tools are needed to transfer the dustbin.

There are some moving vehicles special for dustbins in the prior art, but they are often bulky, inconvenient to use, and inflexible in turning during use. Therefore, based on some existing problems, the invention provides a dustbin cart.

### SUMMARY

For the deficiencies in the prior art, the invention provides an improved dustbin moving vehicle which is simple in structure and convenient to use, is flexible to turn in a dustbin moving process, is foldable and small in volume after folding, and is high in storage performance.

In order to solve the above technical problems, the invention adopts the following technical solution:

An improved dustbin moving vehicle includes a rod body. A first positioning member is arranged on the rod body; the rod body is movably connected with a positioning rod; a second positioning member is arranged on the positioning rod; the rod body is movably connected with a pull rod; a supporting rod is arranged on the rod body; and the bottom of the supporting rod is provided with a wheel.

In the invention, an improved dustbin moving vehicle is provided, which is simple in structure and convenient to use. During use, the pull rod and the positioning rod are unfolded; the first positioning member and the second positioning member on the positioning rod are hooked or clamped on a dustbin to fix the dustbin; and the pull rod is then pushed and pulled, so that the dustbin can be convenient to move. Meanwhile, in the invention, the positioning rod is movably connected to the rod body, and the pull rod is also movably connected to the rod body, so that the vehicle is flexible to turn in the moving process of the dustbin. When the vehicle is not used, the positioning rod and the pull rod hang down and are closed up to make the whole volume reduced and facilitate storage.

In one preferred implementation mode, both the first positioning member and the second positioning member are hook members; and the first positioning member and the second positioning member are used for fixing the dustbin. The structure is simple, and the fixing is convenient.

In one preferred implementation mode, at least two first positioning members are provided, so that the stability is high after the dustbin is fixed.

In one preferred implementation mode, the second positioning member is fixed in assembling holes on the positioning rod through adjusting bolts and positioning nuts; and a plurality of assembling holes are formed in the positioning rod. In the structure, the up-down position of the second positioning member can be adjusted by adjusting the adjusting bolts. A distance between the first positioning member and the second positioning member can be adjusted by selecting different assembling holes, so as to conveniently adapt to dustbins of different specifications.

In one preferred implementation mode, a first arc-shaped rod is arranged on the rod body; the end part of the positioning rod is provided with a first assembling ring; and the first assembling ring is sleeved on the first arc-shaped rod, and can move freely, achieving flexibility and convenience.

In one preferred implementation mode, an angle between a plane where the first arc-shaped rod is located and the supporting rod is an obtuse angle. The obtuse angle determines an inclination angle of the dustbin during moving of the dustbin.

In one preferred implementation mode, a second arc-shaped rod is arranged on the rod body; the end part of the pull rod is provided with a second assembling ring; and the second assembling ring is sleeved on the second arc-shaped rod, and can move freely, achieving flexibility and convenience.

In one preferred implementation mode, two supporting rods form a V-shaped structure; the top ends of the two supporting rods are connected to the positioning rod, so that the supporting intensity is high; the bottom ends of the two supporting rods are assembled in a wheel seat after being gathered; and the lower part of the wheel seat is provided with the wheel, so that it is convenient to move.

In one preferred implementation mode, the end part of the pull rod is provided with a handle for facilitating holding.

In one preferred implementation mode, the wheel is a universal wheel.

Compared with the prior art, the invention has the following beneficial effects: An improved dustbin moving vehicle is provided, which is simple in structure and convenient to use, is flexible to turn in a dustbin moving process, is foldable, small in volume after folding, and is high in storage performance.

### BRIEF DESCRIPTION OF THE DRAWINGS

FIG. 1 is a side view of a dustbin moving vehicle in the invention.
FIG. 2 is a three-dimensional diagram I of a dustbin moving vehicle in the invention.
FIG. 3 is a three-dimensional diagram II of a dustbin moving vehicle in the invention.
FIG. 4 is a schematic diagram of the structure of a second positioning member in the invention.
FIG. 5 is a schematic diagram of the structure of a rod body in the invention.
FIG. 6 is a rough schematic diagram of a dustbin moving vehicle in a use process in the invention.

### DETAILED DESCRIPTION OF THE EMBODIMENTS

The invention is further described in detail below in combination with accompanying drawings and specific implementation modes.

In the following implementation modes, the same or similar reference signs indicate the same or similar originals or originals with the same or similar functions throughout. The following implementation modes described with reference to the drawings are exemplary and only used to explain the invention, and are not understood as a limitation of the invention.

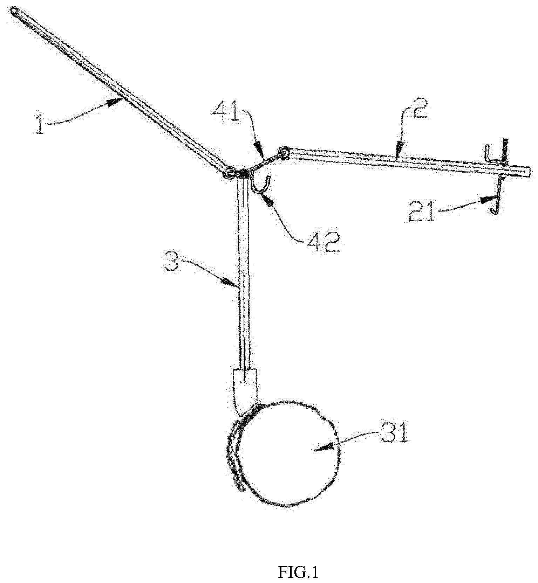

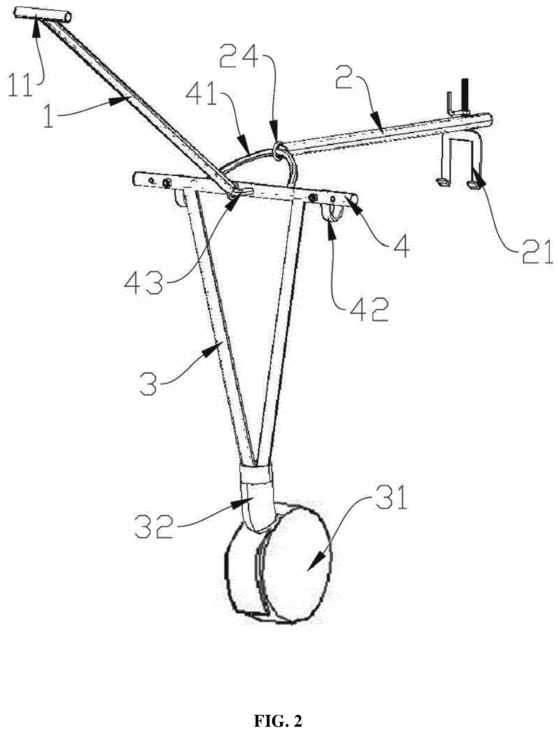

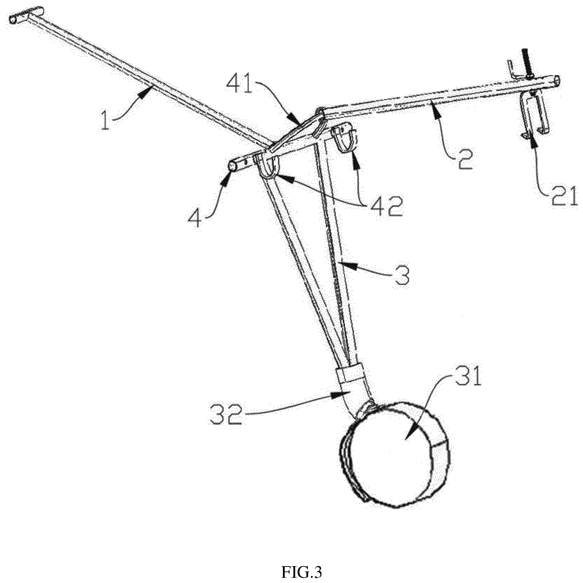

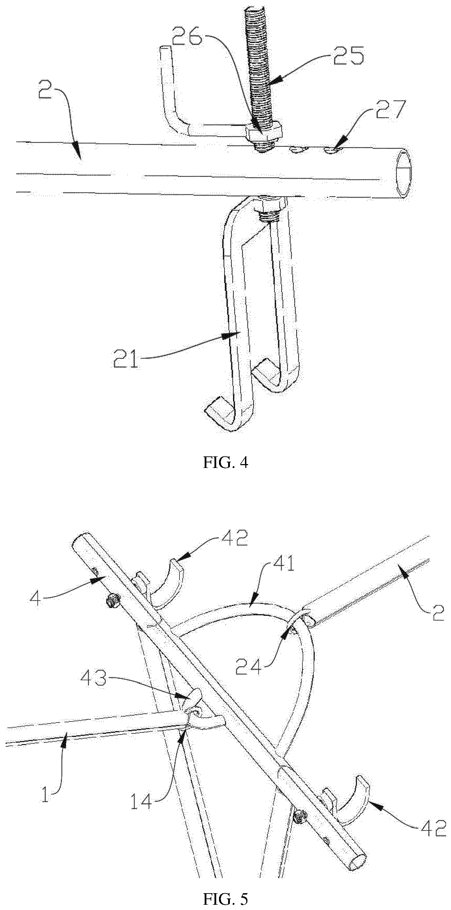

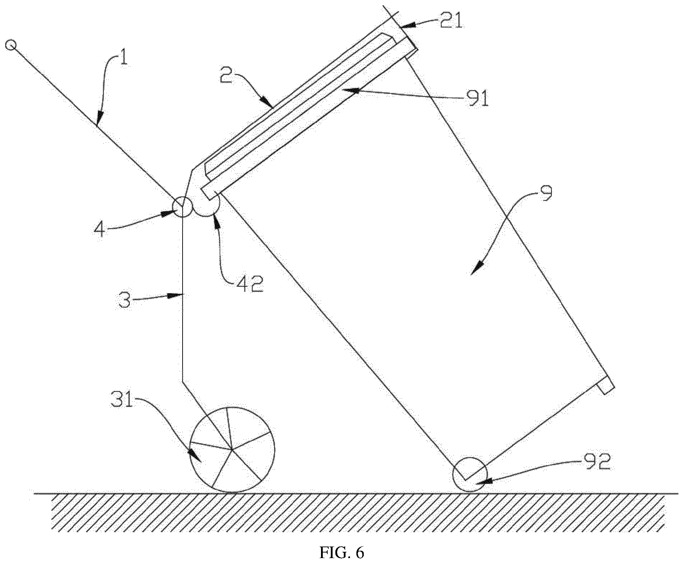

Referring to FIG. 1 to FIG. 6, an improved dustbin moving vehicle in the invention includes a rod body 4. A first positioning member 42 is arranged on the rod body 4; the rod body 4 is movably connected with a positioning rod 2; a second positioning member 21 is arranged on the positioning rod 2; the rod body 4 is movably connected with a pull rod 1; a supporting rod 3 is arranged on the rod body 4; and the bottom of the supporting rod 3 is provided with a wheel 31 which is a universal wheel. Preferably, a first arc-shaped rod 41 is arranged on the rod body 4; the end part of the positioning rod 2 is provided with a first assembling ring 24; and the first assembling ring 24 is sleeved on the first arc-shaped rod 41, and can move freely. In one preferred implementation mode, a second arc-shaped rod 43 is arranged on the rod body 4; the end part of the pull rod 1 is provided with a second assembling ring 43; and the second assembling ring 43 is sleeved on the second arc-shaped rod 43, and can move freely, achieving flexibility and convenience. An angle between a plane where the first arc-shaped rod 41 is located and the supporting rod 3 is an obtuse angle. The obtuse angle determines an inclination angle of the dustbin during moving of the dustbin.

Specifically, in the invention, both the first positioning member 42 and the second positioning member 21 are hook members; and the first positioning member 42 and the second positioning member 21 are used for fixing the dustbin 9. The structure is simple, and the fixing is convenient. At least two first positioning members 42 are provided, so that the stability is high after the dustbin 9 is fixed.

In the invention, the second positioning member 21 is fixed in assembling holes 27 on the positioning rod 2 through adjusting bolts 25 and positioning nuts 26; and a plurality of assembling holes 27 are formed in the positioning rod 2. In the structure, the up-down position of the second positioning member 21 can be adjusted by adjusting the adjusting bolts 25. A distance between the first positioning member 42 and the second positioning member 21 can be adjusted by selecting different assembling holes 27, so as to conveniently adapt to dustbins 9 of different specifications.

In the invention, two supporting rods 3 form a V-shaped structure; the top ends of the two supporting rods 3 are connected to the positioning rod 2, so that the supporting intensity is high; the bottom ends of the two supporting rods 3 are assembled in a wheel seat 32 after being gathered; and the lower part of the wheel seat 32 is provided with the wheel 31, so that it is convenient to move. The end part of the pull rod 1 is provided with a handle 11 for facilitating holding.

In the invention, an improved dustbin moving vehicle is provided, which is simple in structure and convenient to use. During use, the pull rod 1 and the positioning rod 2 are unfolded; the first positioning member 42 and the second positioning member 21 on the positioning rod 2 are hooked or clamped on the dustbin to fix the dustbin 9; and the pull rod 1 is then pushed and pulled, so that the dustbin 9 can be convenient to move. Meanwhile, in the invention, the positioning rod 2 is movably connected to the rod body 4, and the pull rod 1 is also movably connected to the rod body 4, so that the vehicle is flexible to turn in the moving process of the dustbin 9. When the vehicle is not used, the positioning rod 2 and the pull rod 1 hang down and are closed up to make the whole volume reduced and facilitate storage.

According to the above, the invention provides the improved dustbin moving vehicle which is simple in structure and convenient to use, is flexible to turn in a dustbin moving process, is foldable and small in volume after folding, and is high in storage performance.

## Claims

1. An improved dustbin moving vehicle, comprising:
a rod body (4); **characterized in that** a first positioning member (42) is arranged on the rod body (4); the rod body (4) is movably connected with a positioning rod (2); a second positioning member (21) is arranged on the positioning rod (2);
the rod body (4) is movably connected with a pull rod (1);
a supporting rod (3) is arranged on the rod body (4); and a bottom of the supporting rod (3) is provided with a wheel (31).

2. The improved dustbin moving vehicle according to claim 1, **characterized in that** both the first positioning member (42) and the second positioning member (21) are hook members; and the first positioning member (42) and the second positioning member (21) are configured for fixing a dustbin (9).

3. The improved dustbin moving vehicle according to claim 2, **characterized in that** at least two first positioning members (42) are provided.

4. The improved dustbin moving vehicle according to claim 2, **characterized in that** the second positioning member (21) is fixed in a plurality of assembling holes (27) on the positioning rod (2) through adjusting bolts (25) and positioning nuts (26); and the plurality of assembling holes (27) are formed in the positioning rod (2).

5. The improved dustbin moving vehicle according to claim 1, **characterized in that** a first arc-shaped rod (41) is arranged on the rod body (4); an end part of the positioning rod (2) is provided with a first assembling ring (24); and the first assembling ring (24) is sleeved on the first arc-shaped rod (41), and the first assembling ring moves freely.

6. The improved dustbin moving vehicle according to claim 5, **characterized in that** an angle between a plane where the first arc-shaped rod (41) is located and the supporting rod (3) is an obtuse angle.

7. The improved dustbin moving vehicle according to claim 1, **characterized in that** a second arc-shaped rod (43) is arranged on the rod body (4); an end part of the pull rod (1) is provided with a second assembling ring (43); and the second assembling ring (43) is sleeved on the second arc-shaped rod (43), and the second assembling ring moves freely.

8. The improved dustbin moving vehicle according to claim 1, **characterized in that** two supporting rods (3) form a V-shaped structure; top ends of the two supporting rods (3) are connected to the positioning rod (2); bottom ends of the two supporting rods (3) are assembled in a wheel seat (32) after being gathered; and a lower part of the wheel seat (32) is provided with the wheel (31).

9. The improved dustbin moving vehicle according to claim 1, **characterized in that** an end part of the pull rod (1) is provided with a handle (11).

10. The improved dustbin moving vehicle according to claim 1, **characterized in that** the wheel (31) is a universal wheel.
